# EUROPEAN PATENT APPLICATION

(11) **EP 1 306 880 A1**
(43) Date of publication of application: **02.05.2003**
(21) Application number: 01936918.0
(22) Date of filing: 08.06.2001
(51) Int. Cl.: H01J 43/24, H01J 1/32, C03C 3/102, C03C 3/105, C03C 3/07

(54) **MICRO-CHANNEL PLATE**

(30) Priority: 08.06.2000 JP 2000172490
(71) Applicant: Hamamatsu Photonics K.K., Shizuoka-ken 435-8558 (JP)
(72) Inventor: IGUCHI, Masahiko, c/o Hamamatsu Photonics K.K., Hamamatsu-shi, Shizuoka 435-8558 (JP); SUGAWARA, Takeo, c/o Hamamatsu Photonics K.K., Hamamatsu-shi, Shizuoka 435-8558 (JP); MATSUURA, Shigeki, c/o Hamamatsu Photonics K.K., Hamamatsu-shi, Shizuoka 435-8558 (JP); KUSUYAMA, Yutaka, c/o Hamamatsu Photonics K.K., Hamamatsu-shi, Shizuoka 435-8558 (JP); UCHIYAMA, Toshiyuki, c/o Hamamatsu Photonics K.K., Hamamatsu-shi, Shizuoka 435-8558 (JP)
(74) Representative: Musker, David Charles
(86) International application number: JP0104849
(87) International publication number: WO01095366

(57) **Abstract**

A MCP 1 according to the present invention is one in which outer circumferential glass 5 is disposed around channel glass 3 that is provided with a plurality of channels 7 in a long and thin hole shape and is formed in a plate shape. This channel glass 3 contains 35 to 55 % of SiO₂, 0 to 5 % of Al₂O₃, 25 to 46 % of PbO, 0.5 to 10 % of Σ(Li₂O+Na₂O+K₂O), 0.1 to 8 % of Σ(Rb₂O+Cs₂O), 0 to 5 % of Σ(MgO+CaO+SrO+BaO), 0.1 to 7 % of ZrO₂, and 0 to 5 % of Bi₂O₃ (all the above % are wt%). With such a composition, a sufficient glass network structure is formed in the channel glass 3. Moreover, the channel glass 3 can be sufficiently restricted from becoming porous, and moisture can be restricted from being adsorbed thereto. As results of these, a change with time, such as a "warp" can be sufficiently restricted from being generated even in a high-humidity environment.

## Description

### Technical Field

The present invention relates to a micro-channel plate.

### Background Art

The micro-channel plate (hereinafter, referred to as "MCP") is one in which, for example, several millions of conductive glass members provided with extremely micro through holes are converged and formed into a shape of a thin plate. In the MCP, each through hole (channel) arrayed along a thickness direction thereof functions as an independent secondary electron multiplier, and as a whole, a two-dimensional electron multiplier is realized.

The MCP as such an electron multiplier as described above has features that it has a wide range of objects to be detected, such as electron, ion, and others including ultraviolet ray, vacuum ultraviolet ray, neutron ray, and soft X-ray to hard X-ray, that it is compact and lightweight, and that it has pulse-height characteristics excellent in gain property. Then, with these features, the MCP is applied to a variety of electron devices such as an image intensifier (I. I) and a mass spectrometer, and becomes one of extremely important constituent parts thereof.

Moreover, from a viewpoint of improving the function and properties such as mechanical characteristics of the MCP, a composition of a glass material as a main material is conceived to be an important factor, and MCPs composed of glass materials having various compositions are proposed. For example, in the specification of US Patent No. 4112170, various compositions are disclosed as matrix glass composition.

### Disclosure of the Invention

Incidentally, in recent years, further improvements for the various characteristics, which include higher resolution, higher-speed responsiveness and higher resolving power, are required than heretofore in the fields using the electron device to which the MCP is applied. In order to cope with these, a reduction in a channel diameter of the MCP (6 µm or less as an example) and a contraction of a channel pitch are desired, and also the market trend is more strongly inclined toward the further microfabrication of the channels.

Under the situation as described above, the inventors of the present invention fabricated a MCP having micro channels by use of glass members having a conventional glass composition in accordance with a publicly known method, and examined its properties and the like. More specifically, the inventors fabricated a MCP that had a channel diameter of 4 µm and a thickness of 0.2 mm with a glass composition described in the above-described specification of the US Patent, and carried out a weatherability test for the MCP. As a result, the inventors found out that the MCP having the conventional glass composition was apt to cause a "warp" due to a change with time, and had a tendency in which this "warp" advances to easily result in a "breakage". In this case, there occurs a problem that the various characteristics of the MCP cannot be maintained. At present, the further microfabrication of the channels in the MCP is limited because of above-mentioned reason.

In this connection, the present invention was made in consideration of the circumstances as described above. It is an object of the present invention to provide a MCP, which is excellent in weatherability (environment resistance), and is capable of restricting the occurrence of the "warp" sufficiently.

In addition to the above-described findings, the inventors of the present invention found out that a thickness of a wall between channels was thinned accompanied with the reduction in a diameter of the channel, and thus a strength of a glass base itself constituting the MCP was reduced, and that the MCP was apt to be thereby affected by an influence of moisture or the like in the atmosphere, resulting in easy occurrence of the "warp". In order to solve the above-described problems, the inventors found out that the improvement of the strength of the glass base could be achieved by constituting the glass base in accordance with a specific component prescription as a result of an assiduous study based on these findings, and the inventors attained the present invention.

Specifically, the MCP according to the present invention is a micro-channel plate, comprising a glass base formed in a plate shape in which a plurality of channels are provided along a thickness direction thereof, characterized in that an inner diameter of the channels is 1 to 6 µm, and the glass base is formed of a composition containing PbO, alkaline metal oxide and ZrO₂ in SiO₂.

As a method for manufacturing the MCP, for example, a method is cited, in which a core material composed of an acid-soluble component is fittingly inserted into an acid-resistant tube constituting a glass base, this is fused and extended, then the core material is dissolved into an acid and removed, and thus a channel is formed. In this case, the following phenomena possibly occur: (1) metal ions in the core material are transferred to the glass base during the fusing; and (2) the metal ions in the glass base are eluted during the acid dissolution. In this case, a network of a silica structure in the glass base is disconnected, and regions from which the metal ions have escaped become gaps to easily cause the glass base to be porous. Thus, the strength of the glass base may possibly be lowered.

On the contrary to this, if the glass base is formed of a composition containing PbO, alkaline metal oxide and ZrO₂ in SiO₂, the comings and goings of the metal ions from/to the glass base are restricted. Thus, the maintenance of the silica structure in the glass base and the prevention of becoming porous are achieved. On the other hand, since the channel diameter (inner diameter) is set to be 1 to 6 µm, sufficient electron multiplication characteristics are obtained, and the number of channels can be increased significantly, and thus the requirements such as a higher resolution and higher resolving power can be satisfied.

### Brief Description of the Drawings

Fig. 1 is a perspective view schematically showing one embodiment of a MCP according to the present invention.
Fig. 2A is a schematic plan view showing the embodiment of the MCP according to the present invention, and Fig. 2B is a cross-sectional view along a line B-B in Fig. 2A.

### Best Mode for Carrying Out the Invention

An embodiment of the present invention will be described below in detail. Note that the same reference numerals will be assigned to the same elements, and repeated description will be omitted.

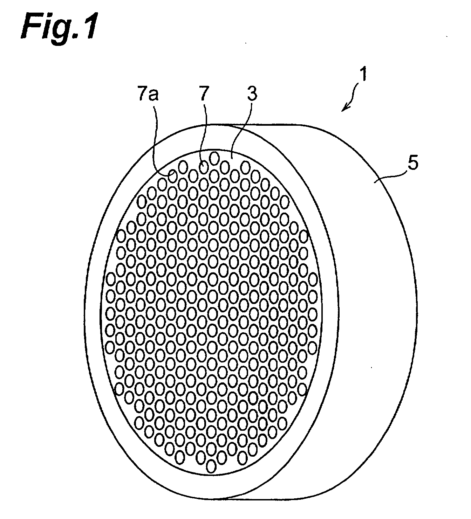

Fig. 1 is a perspective view schematically showing one embodiment of a MCP according to the present invention,

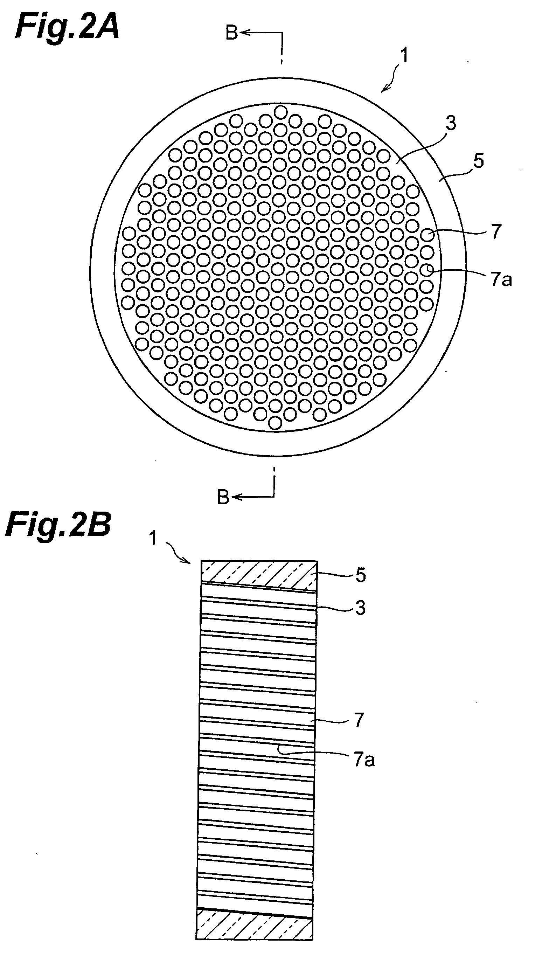

Fig. 2A is a schematic plan view thereof, and Fig. 2B is a cross-sectional view along a line B-B in Fig. 2A.

A MCP 1 is one in which outer circumferential glass 5 is joined to a circumference of channel glass 3 (glass base) formed in a plate shape. Note that this outer circumferential glass 5 may be eliminated. In the channel glass 3, a plurality of channels 7 in a long and thin hole shape are provided along a thickness direction thereof. Moreover, a secondary electron emission material layer such as a metal layer having a specific resistance value is formed at least on an inner wall surface 7a of each of the channels 7, and thus each channel 7 is made as an independent secondary electron multiplier. Furthermore, electrodes (not shown) are formed on both surfaces of the channel glass 3 by vacuum evaporation deposition.

When a voltage is applied between the electrodes, that is, to both ends of each channel 7 in the MCP 1 as described above, an electric field in the axis direction is generated in the channel 7. In this case, when electrons are incident from one end into the channel 7, the incident electrons are imparted with energy from the electric field, collides against the inner wall of the channel 7, and emits secondary electrons. Such a collision is repeated many times, the electrons are increased exponentially, and thus the electron multiplication is carried out.

As a more specific example, for example, in the case where the MCP 1 is applied to a proximity type image intensifier, an incident window having a thin film-shaped photoelectric cathode may be disposed in front of the MCP 1 (on a side from which light is incident), and a light-emitting member layer such as a fluorescent layer may be disposed at the rear of the MCP 1 (on a side from which light is emitted). In this case, detection for the incident light by the electron multiplication is carried out in a state where a high voltage is applied between the photoelectric cathode and the light-emitting member layer.

Moreover, the channel glass 3 constituting the MCP 1 has a composition shown below. Specifically, the composition is:
- SiO₂: 35 to 55 wt%;
- Al₂O₃: 0 to 5 wt%;
- PbO: 25 to 46 wt%;
- Σ(Li₂O+Na₂O+K₂O) : 0.5 to 10 wt%;
- Σ(Rb₂O+Cs₂O) : 0.1 to 8 wt%;
- Σ(MgO+CaO+SrO+BaO) : 0 to 5 wt%;
- ZrO₂: 0.1 to 7 wt%; and
- Bi₂O₃: 0 to 5 wt%.

Note that the wt% denotes a weight%, which is substantially equivalent to a "mass%" in the present invention (the same hereinafter). Moreover, the Σ() denotes a total content ratio of the respective compounds represented by the chemical formulae shown in the parenthesis.

Here, when the content ratio of SiO₂ is less than 35 wt%, the acid-resistance of the channel glass 3 cannot be enhanced sufficiently. On the other hand, when the ratio of SiO₂ exceeds 55 wt%, or when the content ratio of PbO is lowered than 25 wt%, appropriate (suitable) conductivity will be difficult to be imparted to the inner wall surface of the channel 7 of the MCP 1. On the contrary to this, when the content ratio of PbO exceeds 46 wt%, the strength of the channel glass 3 is apt to be decreased significantly.

Moreover, the channel glass 3 contains at least one compound of Li₂O, Na₂O and K₂O as a constituent component, and thus it is possible to adjust a thermal expansion coefficient and a viscosity of the channel glass 3 easily and appropriately. When the total content ratio of these compounds is less than 0.5 wt%, the thermal expansion coefficient and viscosity of the channel glass 3 are apt not to be adjusted sufficiently. On the other hand, when the total content ratio of these exceeds 10 wt%, the thermal expansion coefficient is increased, and the viscosity is lowered. Then, there is an inconvenience that a matching with the core material glass becomes difficult.

Moreover, in Rb₂O and Cs₂O, each ion radius of the metal atoms is larger than that of other alkaline metals, and a distance between the atoms in the glass is larger than that of other alkaline oxides (Li₂O, Na₂O, K₂O). Therefore, these Rb₂O and Cs₂O are difficult to move in the channel glass 3. Accordingly, the channel glass 3 contains Rb₂O and/or Cs₂O, and thus the lifetime characteristics of the gain of the MCP 1 can be improved. Additionally, when the total content ratio of these is less than 0.1 wt%, a sufficient improvement for the lifetime characteristics of the gain cannot be recognized sometimes. On the contrary to this, when the total content ratio exceeds 8 wt%, the lifetime characteristics of the gain does to improve in accordance with the amount of the content, that is, the effect is apt to be saturated. In addition, the cost of the material is high. Furthermore, dark noise is increased.

Furthermore, ZrO₂ is added, and thus the hardness of the channel glass 3 can be increased remarkably, and in addition, the acid resistance of the channel glass 3 can be enhanced significantly. When the content ratio of this ZrO₂ is lowered than 0.1 wt%, the increase effect of the hardness is apt not to be obtained sufficiently. On the other hand, the content ratio of this ZrO₂ exceeds 7 %, the function of the channel glass 3 as glass is damaged, and the channel glass 3 may not possibly be used practically.

As described above, the channel glass 3 is formed by containing ZrO₂ in addition to SiO₂, PbO and alkaline metal oxide in the above-described respective suitable ratios. Therefore, the strength as the glass material can be improved remarkably. Accordingly, the channel glass 3 having a sufficient strength can be obtained even if the wall thickness between the channels is thinned by reducing the channel diameter more than heretofore.

Moreover, since the acid resistance can be improved significantly, the channel glass 3 can be sufficiently prevented from being corroded in etching processing to be described later. Thus, micropores (porous portions) that may possibly occur on the surface portion of the channel glass 3 or in the inside thereof can be remarkably reduced. As a result of this, the lowering of the strength of the channel glass 3, which originates from the presence of such porous portions, can be restricted effectively, and therefore, it is made possible to further restrict the change with time, such as a "warp" and a "breakage".

In addition, when the channel glass 3 contains Al₂O₃, Al₂O₃ is introduced into the two-dimensional or three-dimensional mesh structure of the silica (SiO₂) to achieve the stabilization of the glass structure, and the hardness of the channel glass 3 can be further increased. When the content ratio of this Al₂O₃ exceeds 5 wt%, there are inconveniences that the movement of the alkaline ions is facilitated, that the elution of the alkaline ions by acid is promoted during the dissolution of the core material, and that the amount of the elution is increased. Furthermore, when any one oxide among the above-described oxides of alkaline earth metals (MgO, CaO, SrO and BaO) is contained, the emission ratio of the secondary electrons is increased. When the total content ratio of these alkaline earth metal oxides exceeds 5 wt%, the emission ratio of the secondary electrons does not improve in accordance with the amount of the content, that is, the effect is apt to be saturated.

In addition, when Bi₂O₃ is added, the channel glass 3 is enabled to generate excellent conductivity. When the content ratio of this Bi₂O₃ exceeds 5 wt%, the resistance of the MCP 1 is lowered too much, and may possibly cause an abnormal electric discharge during the application of voltage.

Moreover, in the MCP 1, the diameter (inner diameter) of the channel 7 is set at 1 to 6 µm. When this channel diameter is less than 1µm, sufficient electron multiplication characteristics are apt not to be obtained. On the other hand, when the channel diameter exceeds 6 µm, the channel diameter becomes similar to that of the conventional MCP, and the requirements such as a higher resolution, a higher-speed response and higher resolving power for the electron device on which the MCP is mounted cannot possibly be satisfied sufficiently.

Furthermore, the thickness of the MCP 1 is preferably set at 0.05 to 0.9 mm. When the thickness of the MCP 1 is less than 0.05 mm, the thickness becomes less than the limit of glass grinding, and the MCP 1 may be broken easily by a slight impact or the like during handling thereof. In this case, the MCP 1 becomes difficult to be equal to practical use as a product.

Moreover, it is known that the gain characteristics of the MCP are strongly affected by a standardized length α = L/d defined by a ratio of a channel length L and a channel diameter d. In general, a high gain can be obtained by increasing this standardized length α. However, when the standardized length α is increased, ion feedback occurs due to collision of residual gas, which exist in the channel, and multiplied electrons. In this case, the noise is increased, and a S/N (ratio) is apt to be lowered. In the MCP 1, when the thickness thereof exceeds 0.9 mm, the increase of the noise is apt to be more significant than the improvement of the gain. When the thickness of the MCP 1 is 0.9 mm and the channel diameter is 6 µm, the standardized length α becomes 150, which is approximately equivalent to a value usually conceived to be a limit value.

Furthermore, the pitch of the channels 7 is preferably set at 1.2 to 7.5 µm. When this pitch is less than 1.2 µm, a compartment wall between the channels is excessively thinned even if the channel diameter is 1 µm, a sufficient strength is apt not to be maintained in terms of a structure. On the other hand, when this pitch exceeds 7.5 µm, the characteristics of the MCP 1 are apt not to be improved to an extent where the requirements such as the higher resolution and the higher resolving power can be sufficiently satisfied though the strength of the structure can be guaranteed.

Although no particular limitations are imposed on a method for manufacturing the MCP 1 constructed as described above, for example, a method shown below can be used. First, a glass stick having acid solubility as a core material is fittingly inserted into an acid-resistant glass tube having the composition of the above-described channel glass 3, the both are elongated while being heated and softened monolithically, and thus these are fused together. By this operation, a double structural strand with a diameter of 0.5 to 0.7 mm is obtained, in which the acid-soluble glass core material is coated with the acid-resistant glass. Here, as the glass stick having the acid solubility, for example, B₂O₃-BaO-La₂O₃-series glass and the like can be preferably used.

Next, for example, approximately 10³ pieces of the above-described double structural strands are arrayed parallel and accommodated in a hexagonal prism-shaped mold frame, this is heated up to 500 to 600°C to be mutually fused, and gaps among the respective strands are eliminated. Simultaneously with the above, the strands are elongated, and a multiple strand is obtained, in which the overall diameter is set at approximately 0.5 to 1.0 mm.

Subsequently, for example, 1,000 pieces of the multiple strands are further accommodated in the mold frame, that is, the outer circumferential glass 5, and is heated up again to 500 to 600°C. The multiple strands are mutually fused, and gaps thereamong are eliminated. In such a manner, a group of the multiple strands is formed, in which, for example, 10⁶ pieces of the fine glass strands having the double structure are arranged parallel and mutually fused. As a material of this outer circumferential glass 5, any may be used as long as a thermal expansion coefficient and thermal characteristics thereof are matched with those of the channel glass 3, and a material composition thereof is not particularly limited. There is an advantage that handling of the MCP 1 is facilitated when the outer circumferential glass 5 as described above is provided. Moreover, a scratch or chip can be effectively prevented from being caused on the channel glass 3 during the handling of the MCP 1. Therefore, the generation of the noise originating from the scratch or chip can be restricted.

Then, the group of the multiple strands is thinly cut perpendicularly or at a specified suitable angle to each strand, a cut surface thereof is grinded and polished, and thus a plate-shaped body with a thickness of, for example, 1 mm or less is formed (note that, in Fig. 2B, a plate-shaped body cut at a suitable angle is shown). Then, this plate-shaped body is immersed in an appropriate acidic solution for several hours. Thus, the glass core material composed of the acid-soluble glass is preferentially etched and removed, and a large number of through holes, that is, the channels 7 are formed. Next, the plate-shaped body having these through holes are placed in a hydrogen gas atmosphere at, for example, approximate 400°C for several hours, and thus PbO in the acid-resistant glass (channel glass 3) is reduced by H₂, and Pb and H₂O are generated. A conductive layer is formed on the surface of the channel glass 3 by Pb thus generated. Note that, in the case where Bi₂O₃ is contained, Bi₂O₃ is also reduced, and Bi and H₂O are generated. Then, electrodes are formed on the both surfaces of the channel glass 3 by a method such as vacuum evaporation deposition, and the MCP 1 is obtained. Note that the outer circumferential glass 5 may be removed while the above manufacturing steps are implemented. Moreover, it does not matter if a mold frame that will not be outer circumferential glass is used.

Here, during the above-described fusing of the glass core material and the acid-resistant glass, ion exchange and diffusion thereof may occur between barium ions (Ba²⁺) in the glass core material and lead ions (Pb²⁺) in the acid-resistant glass for forming the channel glass 3. The ratio (frequency) thereof is increased/decreased in accordance with the amount of the content of PbO in the acid-resistant glass. The barium ions introduced into the acid-resistant glass are eluted to the acidic solution in the subsequent step of removing the glass core material by etching, and therefore, a disconnection of a network constituting the silica structure (silicate structure) of the channel glass 3 is brought about. In this case, the regions where barium ions have existed become gaps to cause the channel glass 3 to be porous, and the strength thereof may possibly be lowered. However, the action is not limited to this.

On the contrary to this, in the MCP 1 according to the present invention, the amount of the content of SiO₂ in the channel glass 3 is set in the above-described range, and ZrO₂ is added at the above-described ratio of the content, and thus the invasion. of the barium ions to the channel glass 3 is sufficiently restricted. Therefore, the disconnection of the network of the silica structure in the channel glass 3 can be prevented effectively, and it is made possible to restrict the channel glass 3 from being porous. As a result of this, the lowering of the strength of the channel glass 3 can be sufficiently prevented.

Moreover, in the step of removing the glass core material by etching, lead and alkaline metal are apt to be eluted from the acid-resistant glass as the channel glass 3. The amount of this elution is approximately proportional to the amounts of these contents. In this case, the regions where the lead or alkaline metal has existed becomes gaps, the channel glass 3 becomes porous after all, and the strength thereof may possibly be lowered. However, the action is not limited to this.

On the contrary to this, in the MCP 1 according to the present invention, the amount of the content of SiO₂ in the channel glass 3 is set in the above-described range, and ZrO₂ is added at the above-described ratio of the content, and thus the elution of Pb and alkaline metal from the channel glass 3 can also be restricted. Accordingly, the disconnection of the network of the silica structure in the channel glass 3 can be further prevented, and it is made possible to further restrict the channel glass 3 from being porous. As a result of this, the lowering of the strength of the channel glass 3 can be prevented further sufficiently.

Moreover, in the step of reducing PbO in the acid-resistant glass, since a thickness of a reduced layer is about several micrometers, in the case where the channel diameter is, for example, 6 µm or less, walls, each between adjacent channels (for example, with a thickness of about 1.5 µm or less), are entirely reduced. This can be confirmed from that an amount of weight change before and after the reduction under the condition provided with a realistic resistance value is approximately equal to an amount of oxygen atoms in PbO of the channel glass 3. In this case, oxygen will be emitted from the regions for PbO in the channel glass 3. Therefore, also due to this phenomenon, the network constituting the silica structure (silicate structure) of the channel glass 3 is disconnected, and the regions where the oxygen atoms have existed become gaps, which may cause the channel glass 3 to be porous. However, the action is not limited to this.

On the contrary to this, in the MCP 1 according to the present invention, since the content ratio of PbO in the channel glass 3 is set in the above-described range, the disconnection of the network of the silica structure can be restricted. As a result of this, it is made possible to further restrict the channel glass 3 from being porous. Thus, there is an advantage that the lowering of the strength of the channel glass 3 can be further prevented.

Specifically, in the MCP 1 according to the present invention, particularly excellent effects can be exerted as follows:
(1) the introduction of the barium ions to the channel glass 3 due to the ion exchange and diffusion during the fusing can be reduced;
(2) the elution of lead and alkaline metal from the channel glass 3 can be restricted when the glass core material is removed by etching; and
(3) the emission of oxygen from the channel glass 3 can be reduced when the conductive layer is formed by the reduction.

With these effects in addition to the above-described effects exerted by the respective constituent components of the channel glass 3, the channel glass 3 can be sufficiently restricted from becoming porous. Therefore, micropores or unevenness that may possibly occur on the surface of the channel glass 3 can be reduced, and adsorption of moisture to the channel glass 3 can be restricted. Accordingly, a stress generated originating from the adsorption of the moisture is reduced. Moreover, the disconnection or fracture of the network of the silica structure in the channel glass 3 can be sufficiently prevented. Therefore, the MCP 1 becomes hard to be affected by the influence of the moisture or the like existing in the atmosphere around the MCP 1, and the generation of the change with time, such as the "warp" and the "breakage", can be sufficiently restricted even in a high-humidity environment.

Although the present invention will be described below in more detail based on examples, the present invention is not limited to these examples. Note that "%" denotes a weight reference, that is, "wt%" unless otherwise specified below.

### 〈Example 1〉

An acid-resistant glass material was used, which had a composition of: 42 % for SiO₂; 1 % for Al₂O₃; 42.5 % for PbO; 1.5 % for Li₂O; 2 % for Na₂O; 3 % for K₂O; 1 % for Cs₂O; 1 % for BaO; 3 % for ZrO₂; and 3 % for Bi₂O₃. Then, the channel glass 3 was fabricated as a MCP according to a manufacturing method similar to that described in the above-described embodiment. In this acid-resistant glass material for the channel glass 3, a glass transformation temperature (Tg) was 430°C, a glass yielding temperature (At) was 485°C, a thermal expansion coefficient (α) was 87.7×10⁻⁷°C⁻¹, and a resistance value was 1.1×10¹² Ω/□ (sq.).

### 〈Example 2〉

An acid-resistant glass material was used, which had a composition of: 43 % for SiO₂; 1 % for Al₂O₃; 42.5 % for PbO; 1 % for Li₂O; 2.5 % for Na₂O; 3 % for K₂O; 1 % for Cs₂O; 1 % for BaO; 3 % for ZrO₂; and 2 % for Bi₂O₃. Then, the channel glass 3 was fabricated as a MCP similarly to Example 1. In this acid-resistant glass material for the channel glass 3, a glass transformation temperature (Tg) was 439°C, a glass yielding temperature (At) was 507°C, a thermal expansion coefficient (α) was 86.9×10⁻⁷°C⁻¹, and a resistance value was 4.6×10¹² Ω/□ (sq.).

### 〈Example 3〉

An acid-resistant glass material was used, which had a composition of: 42 % for SiO₂; 1 % for Al₂O₃; 44 % for PbO; 1 % for Li₂O; 2 % for Na₂O; 3 % for K₂O; 1 % for Cs₂O; 1 % for BaO; 3 % for ZrO₂; and 2 % for Bi₂O₃. Then, the channel glass 3 was fabricated as a MCP similarly to Example 1. In this acid-resistant glass material for the channel glass 3, a glass transformation temperature (Tg) was 433°C, a glass yielding temperature (At) was 496°C, a thermal expansion coefficient (α) was 85.6×10⁻⁷°C⁻¹, and a resistance value was 3.7×10¹² Ω/□ (sq.).

### 〈Example 4〉

An acid-resistant glass material was used, which had a composition of: 41 % for SiO₂; 1 % for Al₂O₃; 45.5 % for PbO; 0.5 % for Li₂O; 5.5 % for K₂O; 1 % for Cs₂O; 2 % for CaO; 3 % for ZrO₂; and 3 % for Bi₂O₃. Then, the channel glass 3 was fabricated as a MCP similarly to Example 1. In this acid-resistant glass material for the channel glass 3, a glass transformation temperature (Tg) was 458°C, a glass yielding temperature (At) was 520°C, a thermal expansion coefficient (α) was 86.4×10⁻⁷°C⁻¹, and a resistance value was 5.0×10¹² Ω/□ (sq.).

### 〈Comparative example 1〉

A glass material was used, which had a composition of: 39 % for SiO₂; 50.7 % for PbO; 5.3 % for K₂O; 2.0 % for Rb₂O; and 2 % for BaO (composition of Glass A listed in TABLE 1 in the specification of US Patent No. 4112170). Then, channel glass was fabricated as a MCP according to a publicly known method.

### 〈Weatherability test〉

10 pieces of each disk-shaped channel glass (channel diameter: 4 µm; thickness: 0.2 mm; and outer diameter: 18 mm) as the MCPs fabricated in the respective Examples and Comparative example 1 were left in an atmosphere at a temperature of 40°C and a relative humidity (RH) of 93 % for 480 hours. Then, each state of the "warps" was observed visually or by scale by use of a microscope. As a result of this, no occurrence of a significant "warp" was recognized in the respective Examples. On the contrary to this, a "warp" occurred at a point of 48-hour elapse in the Comparative example 1. A MCP with characteristics of change over time that the ''warp'' occurs in such short period of time is hardly used prctically. From these results, it was confirmed that the MCP of the present invention had sufficient weatherability and environmental resistance.

### Industrial Applicability

The present invention can be utilized as an electron multiplier.

## Claims

1. A micro-channel plate, comprising a glass base formed in a plate shape in which a plurality of channels are provided along a thickness direction thereof,
wherein an inner diameter of the channels is 1 to 6 µm, and
the glass base is formed of a composition containing PbO, alkaline metal oxide and ZrO₂ in SiO₂.

2. The micro-channel plate according to claim 1,
wherein the glass base is formed of a composition shown below:
SiO₂: 35 to 55 wt%;
Al₂O₃: 0 to 5 wt%;
PbO: 25 to 46 wt%;
Σ(Li₂O+Na₂O+K₂O) : 0.5 to 10 wt%;
Σ(Rb₂O+Cs₂O) : 0.1 to 8 wt%;
Σ(MgO+CaO+SrO+BaO) : 0 to 5 wt%;
ZrO₂: 0.1 to 7 wt%; and
Bi₂O₃: 0 to 5 wt%.

3. The micro-channel plate according to claim 1 or 2,
wherein an interval (pitch) between center axes of the respective channels along the thickness direction of the glass base is 1.2 to 7.5 µm.

4. The micro-channel plate according to claim 1 or 2,
wherein a thickness of the glass base is 0.05 to 0.9 mm.

5. The micro-channel plate according to claim 1 or 2,
wherein an interval (pitch) between center axes of the respective channels along the thickness direction of the glass base is 1.2 to 7.5 µm, and
a thickness of the glass base is 0.05 to 0.9 mm.
